# EUROPÄISCHE PATENTSCHRIFT

(11) **EP 3 362 240 B1**
(45) Veröffentlichungstag und Bekanntmachung des Hinweises auf die Patenterteilung: **02.06.2021**
(21) Anmeldenummer: 16781379.9
(22) Anmeldetag: 11.10.2016
(51) Int. Cl.: B29B 11/14, B29C 49/06, B29C 45/16

(54) **SPRITZGEGOSSENER PREFORM ZUR HERSTELLUNG EINES KUNSTSTOFFBEHÄLTERS IN EINEM BLASVERFAHREN, DARAUS HERGESTELLTER KUNSTSTOFFBEHÄLTER UND HERSTELLVERFAHREN FÜR DEN PREFORM BZW. DEN KUNSTSTOFFBEHÄLTER**
INJECTION-MOULDED PREFORM FOR THE PRODUCTION OF A PLASTICS CONTAINER IN A BLOW-MOULDING PROCESS, PLASTICS CONTAINER PRODUCED THEREFROM, AND PRODUCTION METHOD FOR THE PREFORM AND/OR THE PLASTICS CONTAINER
PRÉFORME MOULÉE PAR INJECTION POUR LA FABRICATION D'UN RÉCIPIENT EN MATÉRIAU SYNTHÉTIQUE DANS UN PROCÉDÉ DE SOUFFLAGE, RÉCIPIENT EN MATÉRIAU SYNTHÉTIQUE AINSI FABRIQUÉ ET PROCÉDÉ DE FABRICATION DE LA PRÉFORME OU DU RÉCIPIENT EN MATÉRIAU SYNTHÉTIQUE

(30) Priorität: 14.10.2015 CH 14902015
(43) Veröffentlichungstag der Anmeldung: 22.08.2018
(73) Patentinhaber: ALPLA Werke Alwin Lehner GmbH & Co. KG, 6971 Hard (AT)
(72) Erfinder: MÜLLER, Florian, 5026 Salzburg (AT); UNTERLECHNER, Oliver, 6900 Bregenz (AT)
(74) Vertreter: Bohest AG Branch Ostschweiz
(86) Internationale Anmeldenummer: PCT/EP2016/074345
(87) Internationale Veröffentlichungsnummer: WO 2017/064062

(56) Entgegenhaltungen:
- EP-A1- 0 302 117
- EP-A1- 1 069 977
- WO-A2-2007/111896
- WO-A2-2014/096666
- DE-U1-202009 015 668
- GB-A- 2 246 317
- US-A- 4 715 504
- US-A1- 2013 105 481

## Beschreibung

Die Erfindung betrifft einen spritzgegossenen Preform zur Herstellung eines Kunststoffbehälters in einem Blasverfahren gemäss dem Oberbegriff des Patentanspruchs 1. Die Erfindung betrifft auch einen aus dem Preform hergestellten Kunststoffbehälter. Ferner betrifft die Erfindung auch ein Herstellverfahren für den Preform bzw. den Kunststoffbehälter.

Die in der Vergangenheit üblichen Behältnisse aus Weiss- oder Buntblech, aus Glas oder auch aus Keramik werden in zunehmendem Mass von Behältnissen aus Kunststoff abgelöst. Insbesondere für die Verpackung fluider Substanzen, beispielsweise von Getränken, fliessfähigen Lebensmitteln wie z.B. Ketchup, Sugo, Pesto, Saucen, Senf, Mayonnaise und dergleichen, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien, die Verwendung von Biokunststoffen und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Eine grosse Zahl der heutzutage eingesetzten Kunststoffflaschen und dergleichen Kunststoffbehälter wird in einem Blasverfahren aus einem in einem Spritzgiessverfahren gefertigen Preform hergestellt. Bei diesem Verfahren wird zunächst in einem Spritzgiessverfahren ein Preform von üblicherweise länglicher, röhrchenartiger Gestalt hergestellt, der an seinem einen Längsende mit einem Boden verschlossen ist und am anderen Längsende einen Halsabschnitt aufweist. Die Herstellung der Preforms kann zeitlich und/oder räumlich getrennt vom nachfolgenden Blasverfahren erfolgen. In einem alternativen Verfahren wird der hergestellte Preform ohne zwischenzeitliche Abkühlung unmittelbar nach seiner Herstellung weiter verarbeitet. Dies kann beim sogenannten Spritzblasen mit Hilfe einer einzigen maschinellen Anlage erfolgen, auf welcher der Preform gespritzt, zu einem Behälter der gewünschten Form aufgeblasen und entformt wird. Beim Blasverfahren kann der Preform auch noch zusätzlich mittels eines Reckdorns axial gereckt werden.

Als Rohstoffe für die Herstellung der Preforms kommen Materialien zur Anwendung, deren Hauptbestandteil, also 90% und mehr, beispielsweise aus PET, PET-G, HDPE, PP, PE, PS, PVC, PEN, PA, Copolymeren der angeführten Kunststoffe, Biokunststoffen wie beispielsweise PLA oder PEF, gefüllten Kunststoffe und/oder Mischungen der genannten Kunststoffe, insbesondere Gemischen aus PP und PE, besteht. Die Kunststoffe oder Teile davon können eingefärbt und/oder beschichtet sein. Bedingung für die einsetzbaren Kunststoffe ist ihre Eignung einerseits für das jeweilige Herstellverfahren des Preforms, d.h. für das Spritzgiessen und das nachfolgende Blasverfahren.

Am Halsabschnitt des Preforms können Mittel zur formschlüssigen Festlegung eines mit korrespondierenden Eingriffsmitteln ausgestatteten separaten Verschlussteils ausgebildet sein. Die Mittel zur formschlüssigen Festlegung des separaten Verschlussteils können beispielsweise an der Aussenwandung oder der Innenwandung des Halsteils ausgebildete Gewindeabschnitte oder bajonettartige Vorsprünge oder entsprechende Vertiefungen sein. Beim Blasprozess wird das Halsteil des Preforms nicht mehr verändert. Das separate Verschlussteil ist mit korrespondierenden Eingriffsmitteln ausgestattet, welche formschlüssig mit den am Halsteil ausgebildeten Mitteln zusammenwirken und dadurch ein Verschliessen und wieder Öffnen eines aus dem Preform gefertigten Behälters ermöglichen.

Um den Aufwand für die Logistik des Zusammenführens der aus den Preforms geblasenen Behälter und der Verschlussteile zu verringern bzw. ganz zu beseitigen, ist in der DE 20 2009 015 668 U1 vorgeschlagen, einen spritzgegossenen Preform integral mit einem gleichfalls gespritzten Verschlussteil auszustatten, welches über ein an den Halsabschnitt des Preforms angespritztes Scharnier mit dem Preform verbunden ist. Das Scharnier kann beispielsweise als ein Bandscharnier oder als ein Filmscharnier ausgebildet sein. Das Verschlussteil ist zweiteilig ausgebildet und umfasst einen Verschlussdeckel mit einer Ausgiessöffnung und eine Verschlusskappe mit einem abragenden zylindrischen Fortsatz, der im zusammengeklappten Zustand in die Ausgiessöffnung des Verschlussdeckels ragt und diese verschliesst. Der Verschlussdeckel und die Verschlusskappe können auch einander diametral gegenüberliegend angeordnet sein und jeweils über eigene angespritzte Scharniere mit dem Halsabschnitt des Preforms verbunden sein. Die Handhabung des Preforms mit dem integral über wenigstens ein Scharnier angebundenen Verschlussteil ist nicht trivial und erfordert spezielle apparative Vorkehrungen, damit das Verschlussteil und insbesondere das bzw. die Scharniere beim Blasverfahren nicht beschädigt werden. Es ist ein speziell ausgebildetes Formwerkzeug erforderlich, was den Aufwand für die Herstellung des Behälters aus dem Preform erhöht und verteuert.

Weiterer Stand der Technik wird in US2013105481A1 und GB2246317A offenbart.

Aufgabe der vorliegenden Erfindung ist es daher, diesen Nachteilen des Stands der Technik abzuhelfen.

Die erfindungsgemässe Lösung der vorstehend geschilderten und noch weiterer Aufgaben besteht in einem spritzgegossenen Preform, der die im Anspruch 1 aufgelisteten Merkmale aufweist. Weiterbildungen und/oder vorteilhafte Ausführungsvarianten der Erfindung sind Gegenstand der abhängigen Patentansprüche.

Die Erfindung schlägt einen spritzgegossenen Preform zur Herstellung eines Kunststoffbehälters in einem Blasverfahren vor, der einen länglichen, röhrchenartigen Preformkörper aufweist, dessen eines Längsende geschlossen ausgebildet ist und an dessen anderes Längsende ein Halsabschnitt mit einer Ausgiessöffnung anschliesst. Der Halsabschnitt ist spritztechnisch mit einem Verschlussteil verbunden, das einen Flip-Top Verschluss umfasst, der gleichfalls in einem Spritzgiessverfahren hergestellt ist. Das Verschlussteil weist einen ringförmig ausgebildeten Abschnitt mit einer Innenwandung auf, die unmittelbar an einer Aussenfläche des Halsabschnitts anliegt und einen ringförmig geschlossenen Bereich der Aussenfläche des Halsabschnitts vollständig umschliesst.

Der erfindungsgemäss ausgebildete Preform weist den Vorteil auf, dass seine abmessungskritischen Elemente in einem Spritzgiessverfahren hergestellt sind, welches deutlich geringere Masstoleranzen aufweist. Das einen Flip-Top Verschluss umfassende Verschlussteil weist einen ringförmig ausgebildeten Abschnitt auf, der über seinen gesamten Innenumfang spritztechnisch mit einem ringförmigen geschlossenen Bereich des Halsabschnitts des Preforms verbunden ist. Dadurch ist eine zuverlässige Verbindung zwischen dem Verschlussteil und dem Halsabschnitt des Preforms gewährleistet. Im Gegensatz beispielsweise zu einer Anbindung des Verschlusssteils über ein Filmscharnier oder ein Bandscharnier ist die Verbindung zwischen dem Verschlussteil und dem Halsabschnitt des Preforms bei einer normalen Handhabung des Preforms praktisch unzerstörbar. Das einen Flip-Top Verschluss umfassende Verschlussteil und der Preform sind in einem gemeinsamen Kunststoffspritzverfahren beispielsweise auf derselben Spritzgiessanlage herstellbar. Dadurch entfällt der Aufwand für eine lagegenaue relative Positionierung der beiden Teile zueinander. Dabei werden das Verschlussteil und der Preform sequentiell hergestellt, wobei üblicherweise zuerst das den Flip-Top Verschluss umfassende Verschlussteil und danach der Preform gespritzt werden. Indem das Verschlussteil und der Preform spritztechnisch miteinander verbunden werden, kommt es in der Regel zu einem Verbinden oder zumindest Anhaften des Materials des Preforms an das Material des Verschlussteils. Dabei können die beiden Materialien auch verschieden voneinander sein. Dadurch kann auf eine Dichtzone zwischen dem Verschlussteil und dem Preform verzichtet werden. Der erfindungsgemässe Preform weist somit nur eine einzige Dichtzone auf, nämlich diejenige an der Ausgiessöffnung. Das Verschlussteil und der Preform können eine gemeinsame Längsachse aufweisen, was jedoch nicht zwingend erforderlich ist. Das den Flip-Top Verschluss aufweisende Verschlussteil wird im nachfolgenden Blasverfahren nicht mehr verändert und behält seine im Spritzgiessprozess definierten Abmessungen. Im Blasverfahren wird nur der in die Blasform ragende Abschnitt des Preforms axial und radial gestreckt bzw. aufgeweitet.

In einer Ausführungsvariante der Erfindung kann das Verschlussteil im Anlagebereich formschlüssig mit dem ringförmig umschlossenen Bereich der Aussenfläche des Halsabschnitts verbunden sein. Dazu kann in der Innenwandung des Verschlussteils beispielsweise eine ringförmige Nut vorgesehen sein, in die ein korrespondierend ausgebildeter ringförmiger Vorsprung an der Aussenfläche des umschlossenen Bereichs des Halsabschnitts des Preforms eingreift. Alternativ kann die Innenwandung des Verschlussteils einen ringförmig umlaufenden Vorsprung aufweisen, der in eine Nut in der Aussenfläche des Halsabschnitts eingreift. Die Nut und der Vorsprung müssen nicht notwendigerweise ringförmig umlaufend ausgebildet sein. Eine weitere Variante der Erfindung kann vorsehen, dass die Nut und der Vorsprung von einzelnen Segmenten gebildet sind, die sich jeweils nur über einen Teilabschnitt des Umfangs der Innenwandung des Verschlussteils bzw. der Aussenfläche des umschlossenen Halsabschnitts erstrecken. Da die beiden Teile sequentiell hintereinander in einem gemeinsamen Spritzgiessverfahren hergestellt werden, kann die formschlüssige Verbindung des den Flip-Top Verschluss aufweisenden Verschlussteils und des umschlossenen Halsabschnitts des Preforms auch beliebige andere Formen aufweisen, beispielsweise oval, mehreckig oder auch gezahnt ausgebildet sein.

In eine weiteren Ausführungsvariante des Preforms kann das den Flip-Top Verschluss aufweisende Verschlussteil im Anlagebereich kraftschlüssig mit dem ringförmig umschlossenen Bereich der Aussenfläche des Halsabschnitts verbunden sein. Eine kraftschlüssige Verbindung zwischen dem Verschlussteil und dem umschlossenen Bereich des Halsabschnitts ist beispielsweise dadurch erzielbar, dass das Kunststoffmaterial des Verschlussteils eine grössere Schrumpfrate aufweist als das Material des Preforms. Die kraftschlüssige Verbindung zwischen dem Verschlussteil und dem Halsabschnitt kann alternativ oder in Ergänzung zu einer formschlüssigen Verbindung vorgesehen sein. Um eine kraftschlüssige Verbindung zu unterstützen, kann eine Aussenkontur des Verschlussteils verschieden von seiner Innenkontur sein. So können beispielsweise die Aussenkontur oval und die Innenkontur kreisförmig ausgebildet sein. Hierbei können die Schmalseiten, d.h. diejenigen Seiten, die zwischen der Innenkontur und der Aussenkontur einen geringeren Abstand aufweisen als die Breitseiten, bei denen der Abstand zwischen der Aussenkontur und der Innenkontur grösser ist, beispielsweise als ein Längenvorrat ausgebildet sein. Unter Längenvorrat ist hier zu verstehen, dass die Schmalseite gegenüber der Breitseite dehnfähiger ist und verursachen kann, dass die Breitseite und die Schmalseite mit einer definierten Kraft an den Preform gepresst werden.

In einer anderen Ausführungsvariante des Preforms kann das den Flip-Top Verschluss aufweisende Verschlussteil im Anlagebereich stoffschlüssig, vorzugsweise durch zumindest teilweises Aufschmelzen der an der Aussenfläche des Halsabschnitts anliegenden Innenwandung des Verschlussteils, mit dem ringförmig umschlossenen Bereich der Aussenfläche des Halsabschnitts verbunden sein. Die stoffschlüssige Verbindung wird dabei vorzugsweise ohne das vorherige Einbringen einer zusätzlichen Materialschicht, beispielsweise eines Klebers oder dergleichen, erstellt und ist nur eine Folge von Verbindungskräften zwischen den im heissen Zustand eingespritzten Materialien des Verschlussteils und des Preforms. Die stoffschlüssige Verbindung zwischen dem den Flip-Top Verschluss aufweisenden Verschlussteil und dem umschlossenen Bereich des Halsabschnitts des Preforms kann alternativ oder in Ergänzung zu einer formschlüssigen und/oder zu einer kraftschlüssigen Verbindung zwischen den beiden Teilen erfolgen.

Eine Variante des erfindungsgemässen Preforms kann sich dadurch auszeichnen, dass das Verschlussteil und der Preform aus voneinander verschiedenen Kunststoffmaterialien bestehen. Die Bezeichnung verschiedene Kunststoffmaterialien umfasst dabei auch gleichartige Kunststoffmaterialien, die jedoch unterschiedliche Zuschlagsstoffe beinhalten können und deshalb voneinander verschiedene Eigenschaften aufweisen können.

In einer Ausführungsform des Preforms besteht das den Flip-Top Verschluss aufweisende Verschlussteil zu wenigstens 90 % aus einem Kunststoff der Gruppe bestehend aus Polyolefinen, insbesondere aus Polypropylen oder Polyethylen, Polyamid, PET sowie gummiartige Substanzen, wie z.B. TPE. Die aufgelisteten Materialien sind hinsichtlich ihrer Eigenschaften hinlänglich bekannt und können beispielsweise für die Herstellung von Ausgiess- bzw. Dosieraufsätzen, Verschlüssen oder dergleichen verwendet werden.

In einer weiteren Ausführungsvariante des Preform besteht der Preformkörper mit Halsabschnitt zu wenigstens 90% aus einem Kunststoff der Gruppe bestehend aus PET, PET-G, HDPE, PP, PE, PS, PVC, PEN, PA, Copolymeren der angeführten Kunststoffe, Biokunststoffen wie beispielsweise PLA oder PEF, gefüllten Kunststoffen und/oder Mischungen der genannten Kunststoffe, insbesonder Gemischen aus PP und PE, besteht. Bedingung für die einsetzbaren Kunststoffe ist ihre Eignung einerseits für die Herstellung des Preforms in einem Spritzgiessverfahren und für das darauf folgende Blasverfahren, welches beispielsweise auch ein Streckblasverfahren sein kann, bei dem der Preform während des Blasverfahrens zusätzlich mittels eines Reckdorns in axiale Richtung verstreckt wird. Besonders interessant sind Kunststoffe bzw. Kunststoffgemische, die wenigstens zum Teil transparent sind.

In einer weiteren Ausführungsvariante der Erfindung können das den Flip-Top Verschluss aufweisende Verschlussteil und der Preformkörper mit Halsabschnitt wenigstens bereichsweise voneinander verschiedene Farben aufweisen. Eine unterschiedliche Einfärbung des Verschlussteils und des Preformkörpers mit Halsabschnitt kann aus ästhetischen Gründen, aus Gründen zur Steigerung des Wiedererkennungswertes aber auch aus funktionalen Gründen vorgesehen sein.

In einer Ausführungsform der Erfindung können das den Flip-Top Verschluss aufweisende Verschlussteil und/oder der Preformkörper mit Halsabschnitt wenigstens bereichsweise transparent ausgebildet sein. Auf diese Weise kann später beispielsweise der Füllzustand eines aus dem Preform hergestellten Behälters überprüfbar sein. Es kann beispielsweise eine in axiale Richtung verlaufende Füllstandsanzeige realisiert werden. Schliesslich kann eine teilweise Transparenz auch bloss aus ästhetischen Gründen erwünscht sein.

In einer Ausführungsvariante des erfindungsgemässen Preforms kann der den ringförmig geschlossenen Bereich der Aussenfläche des Halsabschnitts vollständig umschliessende Abschnitt des den Flip-Top Verschluss aufweisenden Verschlussteils eine in eine axiale Erstreckungsrichtung des Preforms gemessene Höhe aufweisen, die wenigstens 1 mm beträgt. In Verbindung mit den üblichen Wandstärken des ringförmigen Abschnitts des Verschlussteils, welche 0,5 mm nicht unterschreitet, weist das Verschlussteil auch bei diesen Mindestabmessungen eine für seine Funktionalität ausreichende Festigkeit auf.

In einer weiteren Ausführungsvariante der Erfindung weist der Preformkörper mit Halsabschnitt eine axiale Länge auf, die 2 mm bis 500 mm, vorzugsweise 10 mm bis 500 mm, beträgt. Die Wandstärken des Preforms entsprechen dabei denjenigen der Preforms des Stands der Technik. Dabei kann eine Wandstärke des Preform im Bereich von 0,5 mm bis 10 mm liegen. Je nach der axialen Länge des Preforms können daraus schalenartige Behälter, becher- oder dosenartige Behälter, flaschenartige Behälter oder sogar kanisterartige Behälter hergestellt werden.

In einer Ausführungsvariante der Erfindung weist die Ausgiessöffnung am Halsabschnitt einen Durchmesser auf, der 3 mm bis 180 mm, vorzugsweise 10 mm bis 100 mm, beträgt. Der Mindestöffnungsdurchmesser trägt dem Umstand Rechnung, dass einerseits beim Spritzgiessverfahren ein Kern die Formkavität in Richtung eines Zentrums begrenzt und andererseits beim Blasverfahren ein Blasdorn bzw. Streckblasdorn durch die Ausgiessöffnung in das Innere des Preforms eingefahren werden muss. Der maximale Öffnungsdurchmesser ergibt sich aus der Art des Behälters, der aus dem Preform im Blasverfahren hergestellt werden soll. So weisen beispielsweise sogenannte Weithalsbehälter einen deutlich grösseren Öffnungsdurchmesser auf als flaschenartige Behälter, um die Entnahme des abgefüllten Guts, beispielsweise mit einem Löffel oder dergleichen, zu erleichtern.

In einer weiteren Ausführungsvariante der Erfindung kann die an der Aussenfläche des Preforms anliegende Innenwandung des den Flip-Top Verschluss aufweisenden Verschlussteils eine Innenkontur aufweisen, die von einer Aussenkontur des Verschlussteils verschieden ist. Hierdurch kann beispielsweise die Aussenkontur an einen ovalen Behälter angepasst werden, während die Innenkontur einer kreisrunden Ausgiessöffnung folgt.

Der Flip-Top Verschluss des Verschlussteils kann über ein Scharnier einstückig an einer den Halsabschnitt umschliessende Manschette angebundenen sein. Derartig ausgebildete Flip-Top Verschlüsse sind hinlänglich bekannt und werden vielfach bei Verpackungen von pastösen Massen eingesetzt. Das spritzgegossene Verschlussteil mit dem Flip-Top Verschluss weist einen abragenden Dichtzylinder mit einer kalibrierten Dichtfläche auf. Zum Verschliessen der Ausgiessöffnung wird der Flip-Top Verschluss in Richtung der Manschette geklappt, wobei der Dichtzylinder in die kalibrierte Ausgiessöffnung am Halsabschnitt des spritzgegossenen Preforms gleitet und abdichtet. Die spritzgegossenen Teile weisen alle kalibrierte Dichtflächen auf, die mit sehr kleinen Toleranzen herstellbar sind. Zum Unterschied von den bekannten Flip-Top Verschlüssen, die beispielsweise nachträglich auf den Halsabschnitt eines geblasenen Behälters aufsetzbar sind, weist der erfindungsgemässe Flip-Top Verschluss nur eine Dichtzone auf. Der Herstellprozess ist vereinfacht und es kann eine zuverlässigere Dichtigkeit des Verschlusses gewährleistet werden.

Das integral mit dem Preform ausgebildete Verschlussteil mit dem Flip-Top Verschluss kann einen beliebigen Querschnitt aufweisen. Das heisst, dass die den Halsabschnitt ringförmig umschliessende Manschette und der über ein Scharnier einstückig angebundene Flip-Top Verschluss beispielsweise rund, oval oder mehreckig ausgebildet sein können. Dadurch kann auch der aus dem Preform in einem nachfolgenden Schritt aufgeblasene Kunststoffbehälter mit einer beliebigen Querschnittsform hergestellt werden.

In einer weiteren Ausführungsvariante des Preforms kann sich von der Manschette des Verschlussteils im wesentlichen in Verlängerung der Wandung des Behälterkörpers eine ringförmig umlaufende Begrenzungswandung erstrecken, die ein Auffangvolumen begrenzt. Der Halsabschnitt des Preforms kann die Manschette in axialer Richtung überragen. Ein die Ausgiessöffnung berandender Öffnungsrand und ein Rand der ringförmig umlaufenden Begrenzungswandung können etwa auf gleicher axialer Höhe liegen. Alternativ kann der Halsabschnitt beispielsweise ca. 2 mm bis 6 mm unterhalb der Höhe des Randes der ringförmig umlaufenden Begrenzungswandung enden. Bei geschlossenem Flip-Top Verschluss werden daher die Ausgiessöffnung und das Auffangvolumen abgedichtet. Am Halsabschnitt sind Aussparungen vorgesehen, welche etwa auf Höhe der Manschette angeordnet sind und eine Verbindung zwischen dem Auffangvolumen und dem Inneren des Preformkörpers bilden.

In einer weiteren Ausführungsform des erfindungsgemässen Preforms kann sich von der den Halsabschnitt umschliessenden Manschette einen den Halsabschnitt überragender zylindrischen Fortsatz erstrecken, der eine Aussenfläche besitzen, von der ein Griffteil abragt, das sich in Richtung des Preformbodens erstreckt. Ein gemäss der geschilderten Ausführungsvariante ausgebildeter Preform erlaubt eine einfache Herstellung eines Kunststoffbehälters mit integriertem Handgriff.

Eine weitere Ausführungsvariante des erfindungsgemässen Preforms kann vorsehen, dass das Verschlussteil mit dem Flip-Top Verschluss, der über ein Scharnier einstückig an eine den Halsabschnitt umschliessende Manschette angeformt ist, einen den Halsabschnitt überragenden zylindrischen Fortsatz aufweist. Dabei kann der Preform einen einstückig angespritzten Ausgiessfortsatz aufweisen, der den Halsabschnitt des Preforms überragt und mit einem axialen Schlitz versehen ist, der sich bis zu einer Oberseite der Manschette erstreckt. Der Ausgiessfortsatz kann einen Öffnungsdurchmesser aufweisen, der im wesentlichen einem Durchmesser der Ausgiessöffnung am Halsabschnitt entspricht. Indem der Ausgiessfortsatz bereits integral mit dem Preform gespritzt ist, kann ein separater Ausgiessaufsatz, der üblicherweise auf die Ausgiessöffnung des fertig geblasenen Kunststoffbehälters aufgesetzt wird, entfallen. Dichtigkeitsprobleme zwischen dem Ausgiessaufsatz und Innenwandung oder der Aussenwandung des Behälterhalses können dadurch vermieden werden.

Der erfindungsgemässe Kunststoffbehälter kann in einem Zwei- oder Mehrkomponenten Spritzgiessverfahren hergestellt sein. Beispielsweise erfolgt die Herstellung des erfindungsgemässen Preforms einer Etagenwendetechnik oder in einer Würfeltechnik. Diese Herstellverfahren sind hinlänglich erprobt und erlauben eine wirtschaftliche und schnelle Herstellung grosser Stückzahlen.

Ein erfindungsgemässer Kunststoffbehälter ist aus einer der im vorstehenden geschilderten Variante des erfindungsgemässen Preforms in einem Blasverfahren hergestellt. Der Kunststoffbehälter kann ein Fassungsvolumen von 5 ml bis 151, vorzugsweise 50 ml bis 5 1, besonders bevorzugt 100 ml bis 1000 ml aufweisen. Ganz besonders bevorzugt sind Kunststoffbehälter mit einem Fassungsvolumen von nur 5 ml bis 150 ml.

Der Kunststoffbehälter kann in einem Spritzblasverfahren oder in einem räumlich und/oder zeitlich getrennten Blasverfahren hergestellt sein. Das Spritzblasverfahren weist den Vorteil auf, dass der erfindungsgemässe Preform von seiner Herstellung im Spritzgiessverfahren bis zum Aufblasen zum fertigen Kunststoffbehälter nicht aus der apparativen Anlage entfernt werden muss. Alternativ kann der erfindungsgemässe Preform aber auch zwischengelagert, an den gewünschten Ort versandt und erst zu einem späteren Zeitpunkt zu einem Kunststoffbehälter der gewünschten Form aufgeblasen werden.

Eine Variante des Kunststoffbehälters kann aus einem während des Blasverfahrens mittels eines Reckdorns axial gestreckten Preform hergestellt sein. Die zusätzliche axiale Verstrecken des Preforms mit einem Reckdorn kann die Festigkeit des daraus geblasenen Kunststoffbehälters zusätzlich erhöhen.

Ein Verfahren zur Fertigung eines erfindungsgemässen Preforms weist die folgenden Verfahrensschritte auf:
(i) Spritzgiessen eines einen Flip-Top Verschluss aufweisenden Verschlussteils in geöffneter Position in einer ersten Spritzform;
(ii) gegebenenfalls Abkühlen des Verschlussteils;
(iii) Spritzen eines Preforms mit Preformkörper und Halsabschnitt mit Ausgiessöffnung an das Verschlussteil in einer zweiten Spritzform derart, dass eine Innenwandung eines ringförmigen Abschnitts des Verschlussteils unmittelbar an einer Aussenfläche des Halsabschnitts des Preforms anliegt;
(iv) Abkühlen des Preforms mit anliegendem Verschlussteil; und
(v) Entformung des Preforms mit anliegendem Verschlussteil aus der zweiten Spritzform;
   wobei alle Verfahrensschritte in einer Maschineneinheit durchgeführt werden.

Unter einer Maschineneinheit ist eine Spritzgiessmaschine zu verstehen, die ein Werkzeug aufnimmt, das mit unterschiedlichen Spritzformen bestückt sein kann, gegebenenfalls auch ein Blaswerkzeug umfasst, um aus einem spritzgegossenen Preform durch Blasen oder Streckblasen einen Kunststoffbehälter zu erzeugen. Das Werkzeug kann hierbei eine Shuttle-Einheit sein, die zum Bedienen der einzelnen Fertigungsstationen in einer Ebene verschoben werden kann, oder ein Würfelwerkzeug, welches zum Bedienen der einzelnen Fertigungsstationen gedreht werden kann. Durch das Hinzufügen von Einlegeteilen und/oder Schiebern können in einer Spritzform unterschiedliche Kavitätsgeometrien erzeugt werden.

Eine Verfahrensvariante kann vorsehen, das der Flip-Top Verschluss des Verschlussteils von einer geöffneten Position in eine die Ausgiessöffnung des Preforms verschliessende Position verlagert wird. Das Verlagern des Flip-Top Verschlusses in die verschliessende Position kann in der Maschineneinheit durchgeführt werden. Alternativ kann das Verlagern auch in einer separaten Station erfolgen, nach der Entnahme des Preforms aus der zweiten Spritzform.

Ein Verfahren zur Herstellung eines Kunststoffbehälters aus einem erfindungsgemässen Preform kann durch Blasen oder Streckblasen in einer Maschineneinheit erfolgen, in der der Preform gefertigt wird. Alternativ kann die Fertigung des Kunststoffbehälters auch zeitlich und/oder räumlich getrennt von der Herstellung des Preforms erfolgen. Hierbei ist es in der Regel erforderlich, dass der Preform zum Blasen oder Streckblasen in einem Ofen erneut erwärmt wird.

Weitere Vorteile und Merkmale der Erfindung ergeben sich aus der nachfolgenden Beschreibung von Ausführungsbeispielen unter Bezugnahme auf die schematischen Zeichnungen. Es zeigen in nicht massstabsgetreuer Darstellung:
- Fig. 1: eine perspektivische Ansicht eines ersten Ausführungsbeispiels eines erfindungsgemäss ausgebildeten Preforms;
- Fig. 2: eine axial geschnittene Darstellung des Preforms aus Fig. 1;
- Fig. 3: eine perspektivische Ansicht eines aus einem Preform gemäss Fig. 1 in einem Blasverfahren hergestellten Kunststoffbehälters in geöffnetem Zustand;
- Fig. 4: eine perspektivische Ansicht des Kunststoffbehälters gemäss Fig. 3 in verschlossenem Zustand;
- Fig. 5: eine axial geschnittene Darstellung des Kunststoffbehälters gemäss Fig. 3;
- Fig. 6: eine perspektivische Ansicht eines zweiten Ausführungsbeispiels eines aus einem erfindungsgemässen Preform geblasenen Kunststoffbehälters;
- Fig. 7: eine axial geschnittene Darstellung des Kunststoffbehälters gemäss Fig. 6;
- Fig. 8: eine perspektivische Ansicht eines dritten Ausführungsbeispiels eines aus einem erfindungsgemässen Preform geblasenen Kunststoffbehälters;
- Fig. 9: eine axial geschnittene Darstellung des Kunststoffbehälters gemäss Fig. 8;
- Fig. 10: eine perspektivische Ansicht eines weiteren Ausführungsbeispiels eines aus einem erfindungsgemässen Preform geblasenen Kunststoffbehälters; und
- Fig. 11: eine axial geschnittene Darstellung des Kunststoffbehälters gemäss Fig. 10.

In der nachfolgenden Figurenbeschreibung bezeichnen gleiche Bezugszeichen jeweils gleiche Bestandteile bzw. Komponenten eines spritzgegossenen Preforms bzw. eines daraus in einem Blasverfahren hergestellten Kunststoffbehälters.

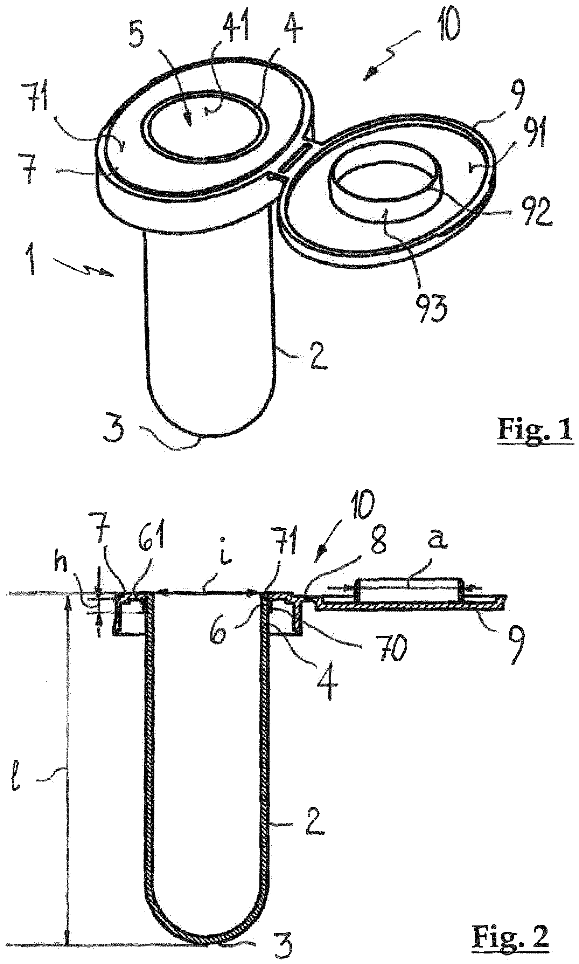

Ein in Fig. 1 und 2 dargestellter Preform ist gesamthaft mit dem Bezugszeichen 1 versehen. Er umfasst einen röhrchenartigen Preformkörper 2, dessen eines Längsende 3 geschlossen ausgebildet ist. An das andere Längsende schliesst ein Halsabschnitt 4 mit einer Ausgiessöffnung 5 an. Wie insbesondere aus der axial geschnittenen Darstellung in Fig. 2 ersichtlich ist, ist der Halsabschnitt 4 in einem ringförmig umlaufenden Bereich 6 von einer Manschette 7 umgriffen. Eine Innenwandung 71 eines Abschnitts 70 der Manschette 7 liegt unmittelbar an einer Aussenfläche 61 des ringförmigen Bereichs 6 des Halsabschnitts 4 an und umschliesst den ringförmigen Bereich 6 vollständig. Ein sogenannter Flip-Top Verschluss 9 ist über ein Scharnier 8 einstückig mit der Manschette 7 verbunden. Beispielsweise ist das Scharnier 8 als ein Filmscharnier ausgebildet. Der Flip-Top Verschluss 9 weist einen von seiner Unterseite 91 abragenden Dichtzylinder 92 mit einer kalibrierten Dichtfläche 93 auf. Zum Verschliessen der Ausgiessöffnung 5 wird der Flip-Top Verschluss 9 in Richtung der Manschette 8 geklappt, wobei der Dichtzylinder 92 in die Ausgiessöffnung 5 am Halsabschnitt 4 des Preforms 1 gleitet und gegenüber der Innenwandung 41 des Halsabschnitts 4 abdichtet. Die Manschette 7 und der über das Scharnier 8 einstückig angebundene Flip-Top Verschluss 9 werden im Folgenden auch als Verschlussteil 10 bezeichnet.

Die Manschette 7 mit dem über das Scharnier 8 einstückig angebundenen Flip-Top Verschluss 9 sind in einem Spritzgiessverfahren hergestellt. Der Preformhals 1 ist gleichfalls in einem Spritzgiessverfahren hergestellt. Der Herstellvorgang erfolgt dabei derart, dass zunächst die Manschette 7 mit Scharnier 8 und Flip-Top Verschluss 9 gespritzt werden. Danach wird der Preform 1 mit Preformkörper 2 und Halsabschnitt 4 gespritzt. Dabei werden die Innenwandung 71 des umschliessenden Abschnitts 70 der Manschette 7 und die Aussenfläche 61 des von der Manschette 7 umschlossenen ringförmigen Bereichs 6 des Halsabschnitts spritztechnisch miteinander verbunden. Die Verbindung zwischen der Innenwandung 71 und der Aussenfläche 61 kann stoffschlüssig und/oder kraftschlüssig und/oder formschlüssig sein.

Wie aus dem dargestellten Ausführungsbeispiel ersichtlich ist, kann der Halsabschnitt 4 bündig mit einer Oberseite 72 der Manschette 7 abschliessen. Der Preform 1 weist wenigstens im von der Manschette 7 umschlossenen ringförmigen Bereich 6 des Halsabschnitts einen kreisförmigen Querschnitt auf. Üblicherweise weist der Preform 1 über seine gesamte axiale Längserstreckung einen kreisförmigen Querschnitt auf. Die Manschette 7 und der Flip-Top Verschluss 9 können eine beliebige Form aufweisen, beispielsweise einen kreisförmigen, ovalen oder auch mehreckigen Querschnitt aufweisen. Der vom Flip-Top Verschluss 9 abragende Dichtzylinder 92 weist einen kreisförmigen Querschnitt auf und besitzt einen Aussendurchmesser a, der einem Innendurchmesser i der Ausgiessöffnung 5 am Halsabschnitt 4 entspricht.

Die Manschette 7 mit dem über das Scharnier 8 einstückig angebundenen Flip-Top Verschluss 9 und der Preform 1 können aus voneinander verschiedenen Kunststoffmaterialien bestehen. Manschette 7, Scharnier 8 und Flip-Top Verschluss 9 können zu wenigstens 90 % aus einem Kunststoff der Gruppe bestehend aus Polyolefinen, insbesondere aus Polypropylen oder Polyethylen, Polyamid, PET sowie gummiartige Substanzen, wie z.B. TPE, bestehen. Der Preform 1 kann beispielsweise zu wenigstens 90% aus einem Kunststoff der Gruppe bestehend aus PET, PET-G, HDPE, PP, PS, PVC, PEN, PA, Copolymeren der angeführten Kunststoffe, Biokunststoffen wie beispielsweise PLA oder PEF, gefüllten Kunststoffen und/oder Mischungen der genannten Kunststoffe bestehen. Bedingung für die einsetzbaren Kunststoffe ist ihre Eignung einerseits für die Herstellung des Preforms 1 in einem Spritzgiessverfahren und für das darauf folgende Blasverfahren, welches beispielsweise auch ein Streckblasverfahren sein kann, bei dem der Preform 1 während des Blasverfahrens zusätzlich mittels eines Reckdorns in axiale Richtung verstreckt wird. Das Verschlussteil 10 bestehend aus Manschette 8, Scharniert 8 und Flip-Top Verschluss 9 und der Preform 1 können wenigstens bereichsweise voneinander verschiedene Farben aufweisen. Alternativ können das Verschlussteil Das Verschlussteil 10 und/oder der Preform 1 können wenigstens bereichsweise transparent ausgebildet sein.

Der den ringförmigen Bereich 6 des Halsabschnitts 4 umschliessende Abschnitt 70 der Manschette 7 weist eine in eine axiale Erstreckungsrichtung des Preforms 1 gemessene Höhe h auf, die wenigstens 1 mm beträgt. Der Preform 1 weist eine über seinen Preformkörper 2 und den Halsabschnitt 4 gemessene axiale Länge 1 auf, die 2 mm bis 500 mm, vorzugsweise 10 mm bis 500 mm, beträgt. Die Wandstärken des Preforms entsprechen dabei denjenigen der Preforms des Stands der Technik und können 0,5 mm bis 10 mm betragen. Der Innendurchmesser i der Ausgiessöffnung 5 beträgt 3 mm bis 180 mm, vorzugsweise 10 mm bis 100 mm.

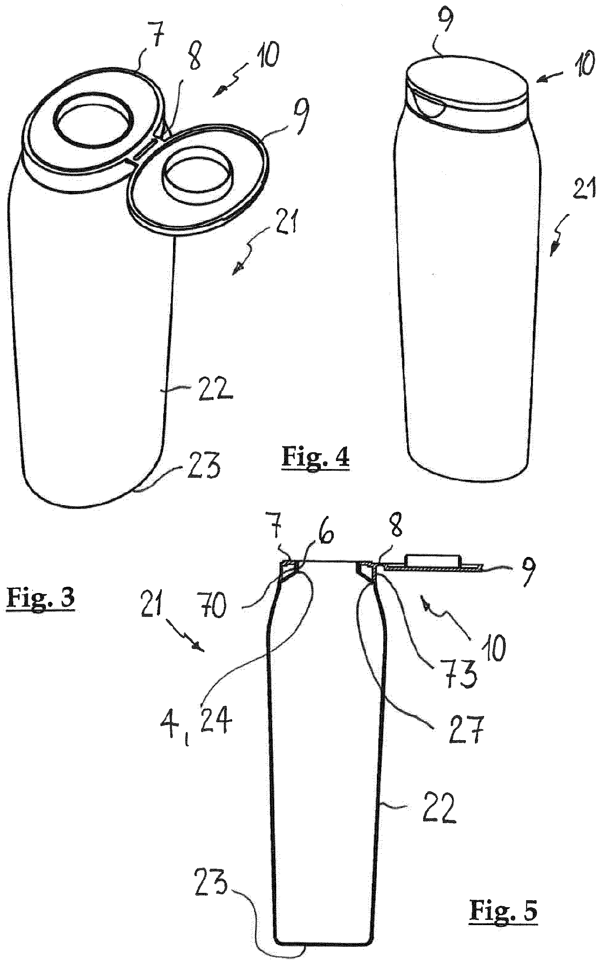

Fig. 3 und 4 zeigen zwei perspektivische Ansichten eines aus einem Preform gemäss Fig. 1 und 2 blasgeformten Kunststoffbehälters 21. Der Kunststoffbehälter 21 besitzt einen Behälterkörper 22, der gemäss eines Blasformkavität aufgeblasen ist. Ein geschlossen ausgebildeter Behälterboden 23 bildet zugleich eine Standfläche für den Kunststoffbehälter 21. An einem dem Behälterboden 23 gegenüberliegenden Längsende des Kunststoffbehälters 21 ist das Funktionsteil 10 angeordnet, das im dargestellten Ausführungsbeispiel und gemäss dem spritzgegossenen Preform (Fig. 1 und Fig. 2), aus dem der Kunststoffbehälter 21 in einem Blasverfahren hergestellt ist, aus der Manschette 7 und dem über das Scharnier 8 einstückig angeformten Flip-Top 9 Verschluss besteht. Fig. 3 zeigt den Kunststoffbehälter 21 im geöffneten Zustand, während Fig. 4 den Kunststoffbehälter 21 mit verschlossenem Flip-Top Verschluss 9 zeigt. Manschette 7 und der über das Scharnier 8 einstückig angebundene Flip-Top Verschluss 9 werden im Folgenden auch als Verschlussteil 10 bezeichnet.

Aus der axial geschnittenen Darstellung in Fig. 5 ist ersichtlich, dass der Halsabschnitt 4 des Preforms (1, Fig. 1 und Fig. 2) beim Blasverfahren unverändert bleibt und einen Behälterhals 24 bildet. Abschnitt 70 der Manschette 7 des Verschlussteils 10 umschliesst den ringförmigen Bereich 6 des Halsabschnitts 4 bzw. des Behälterhalses 24 und ist spritztechnisch mit diesem verbunden. Der Preform ist in einer Behälterschulter 27 derart aufgeblasen, dass er an einem von der Manschette 7 abragenden Mantel 73 anliegt.

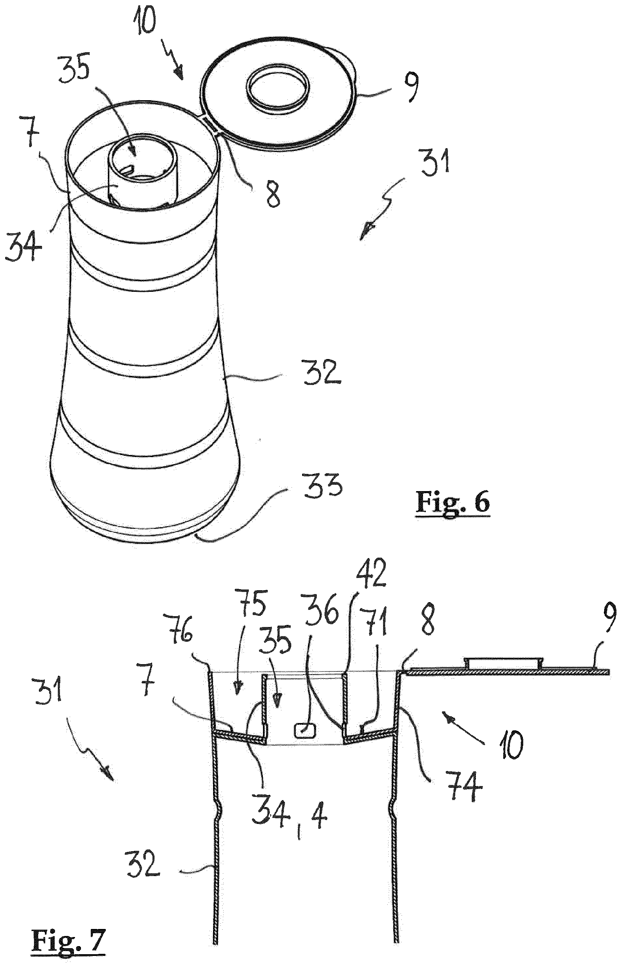

Fig. 5 und 6 zeigen weiteres Ausführungsbeispiel einer aus einem erfindungsgemässen Preform in einem Blasverfahren hergestellten Kunststoffbehälters, der gesamthaft mit dem Bezugszeichen 31 versehen ist. Der Kunststoffbehälter 31 weist wiederum einen Behälterkörper 32 mit einem verschlossenen Behälterboden 33 auf. An seinem dem Behälterboden 33 gegenüberliegenden Längsende grenzt der Behälterkörper 32 wiederum an ein Versclussteil 10 an, welches eine Manschette 7 und einen über ein Scharnier 8 einstückig angebundenen Flip-Top Verschluss 9 aufweist. Von der Manschette 7 erstreckt sich im wesentlichen in Verlängerung der Wandung des Behälterkörpers 32 eine ringförmig umlaufende Begrenzungswandung 74, die ein Auffangvolumen 75 begrenzt. Der im Blasverfahren unverändert erhaltene Halsabschnitt 4 des Preforms bildet nun einen Behälterhals 34, der die Manschette 7 in axialer Richtung überragt. Ein die Ausgiessöffnung 5, welche nun einen Behälterausguss 35 bildet, berandender Öffnungsrand 42 und ein Rand 76 der ringförmig umlaufenden Begrenzungswandung 74 liegen etwa auf gleicher axialer Höhe bzw. endet der Behälterhals 34 beispielsweise ca. 2 mm bis 6 mm unterhalb der Höhe des Randes 76 der ringförmig umlaufenden Begrenzungswandung 74. Bei geschlossenem Flip-Top Verschluss 9 werden daher der Behälterausguss 35 und das Auffangvolumen 75 abgedichtet. Am Behälterhals 34 sind Aussparungen 36 vorgesehen, die etwa auf Höhe der Manschette 7 angeordnet sind und eine Verbindung zwischen dem Auffangvolumen 75 und dem Inneren des Kunststoffbehälters 31 bilden.

Der die Manschette 7 überragende Halsabschnitt 4 ist spritztechnisch bereits am Preform ausgebildet, welcher im Blasverfahren zu dem Kunststoffbehälter 31 aufgeblasen wird. Ebenso sind die Aussparungen 36 am Halsabschnitt 4 bereits spritztechnisch am Preform angebracht. Das Verschlussteil 10 und die sich oberhalb der Manschette 7 erstreckenden Abschnitte des Preforms werden beim Blasverfahren nicht mehr verändert und behalten ihre durch das Spritzgiessen vorgegebenen Abmessungen bei. Nur der sich unterhalb des Funktionsteils 10 erstreckende Abschnitt des Preforms wird beim Blasverfahren axial und radial gestreckt bzw. aufgeweitet. Dabei wird der sich unterhalb des Verschlussteils 10 in Richtung des Preformkörpers erstreckende Teil des Halsabschnitts 4 des Preforms beispielsweise derart verformt, dass er im Wesentlichen in Anlage zu einer Unterseite der Manschette 7 gelangt.

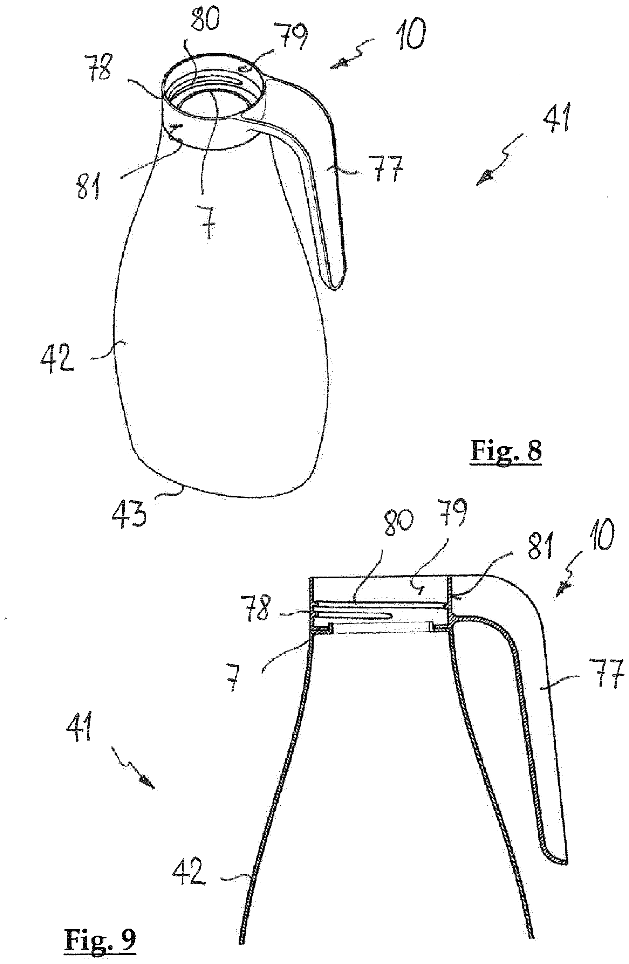

Fig. 8 und Fig. 9 zeigen ein weiteres Ausführungsbeispiel eines aus einem erfindungsgemässen Preform hergestellten Kunststoffbehälters 41. Der Kunststoffbehälter 41 weist einen Behälterkörper 42 auf, an den ein Verschlusstteil 10 mit einem angeformten Griffteil 77 anschliesst. Das Funktionsteil 10 ist wiederum als eine den Halsabschnitt umschliessende Manschette 7 ausgebildet sein. Von der Oberseite 72 der Manschette 7 ragt ein zylindrischer Fortsatz 78 axial ab, der eine Innenfläche 79 aufweist, in der Mittel 80 zur formschlüssigen Festlegung eines mit korrespondierenden Eingriffsmitteln ausgestatteten separaten Deckels ausgebildet sind. Die Mittel 80 an der Innenfläche 79 des zylindrischen Fortsatzes 78 und die korrespondierenden Eingriffsmittel sind beispielsweise Gewindeabschnitte und korrespondierende Gewindefurchen. Dabei können an der Innenfläche 79 Gewindefurchen oder Gewindeabschnitte angebracht sein. Alternativ können die Mittel zur formschlüssigen Festlegung eines mit korrespondierenden Eingriffsmitteln ausgestatteten separaten Deckels auch als Nut bzw. Eingriffsvorsprung eines Bajonettverschlusses ausgebildet sein. In Einklang mit den vorstehend beschriebenen Ausführungsbeispielen kann das Verschlussteil aber auch einen über ein Scharnier an die Manschette angebundenen Flip-Top Verschluss umfassen (nicht dargestellt).

Das Griffteil 77 ragt von einer Aussenfläche 81 des zylindrischen Fortsatzes 78 ab und erstreckt sich in Richtung eines Behälterbodens 43. Das Verschlusstteil 10 mit angeformtem Griffteil 77 und zylindrischem Fortsatz 78 mit formschlüssigen Mitteln 80 zur formschlüssigen Festlegung eines mit korrespondierenden Eingriffsmitteln ausgestatteten separaten Deckels können in einem Spritzgiessverfahren hergestellt und spritztechnisch mit dem Preform verbunden sein, aus dem der Kunststoffbehälter geblasen wird. Das Verschlussteil 10 wird beim Blasverfahren nicht mehr verändert und behält seine durch das Spritzgiessen vorgegebenen Abmessungen bei. Nur der sich unterhalb des Verschlussteils 10 erstreckende Abschnitt des Preforms wird beim Blasverfahren axial und radial gestreckt bzw. aufgeweitet. Dabei wird der sich unterhalb des Verschlussteils 10 in Richtung des Preformkörpers erstreckende Teil des Halsabschnitts 4 des Preforms beispielsweise derart verformt, dass er im Wesentlichen in Anlage zu einer Unterseite der Manschette 7 gelangt.

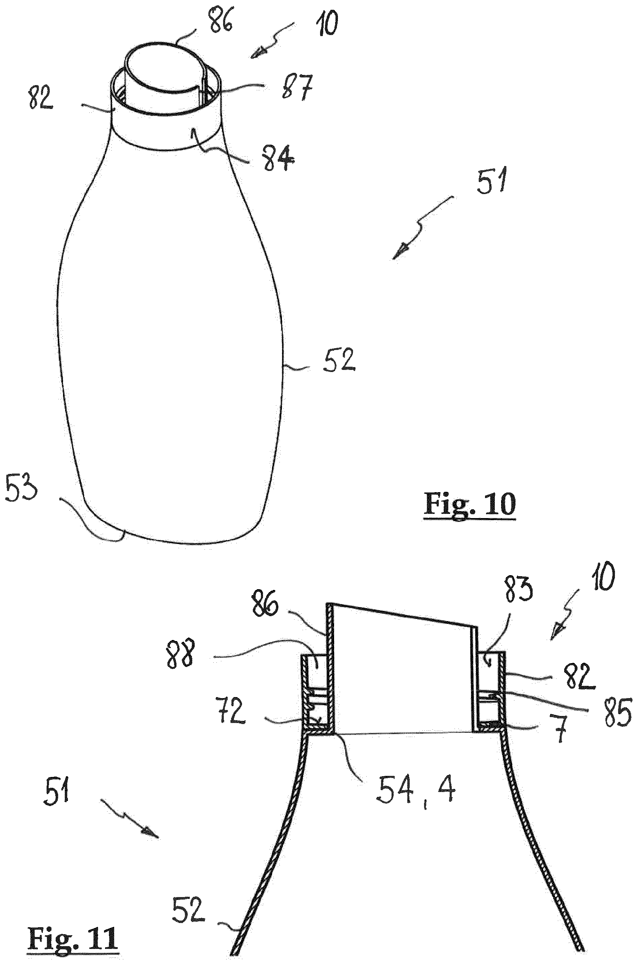

Fig. 10 und Fig. 11 zeigen ein weiteres Ausführungsbeispiel eines Kunststoffbehälters 51, der in einem Blasverfahren aus einem erfindungsgemässen Preforms hergestellt ist. Der Kunststoffbehälter 51 weist wiederum einen Behälterkörper 52 auf, der von einem Behälterboden 53 verschlossen ist, der zugleich eine Standfläche für den Kunststoffbehälter 51 bildet. An einem dem Behälterboden 53 gegenüberliegenden Längsende des Behälterkörpers trägt der Kunststoffbehälter 51 das Funktionsteil 10. Das Funktionsteil 10 weist eine Manschette 7 auf, von deren Oberseite 72 ein zylindrischer Fortsatz 82 abragt. An einer Innenfläche 83 des zylindrische Fortsatz 82 sind wiederum Mittel 85 zur formschlüssigen Festlegung eines mit korrespondierenden Eingriffsmitteln ausgestatteten separaten Deckels ausgebildet. Die Mittel 85 zur formschlüssigen Festlegung eines mit korrespondierenden Eingriffsmitteln ausgestatteten separaten Deckels können beispielsweise Gewindeabschnitte und korrespondierende Gewindefurchen sein. Dabei können an der Innenfläche 83 Gewindefurchen oder Gewindeabschnitte angebracht sein. Alternativ können die Mittel zur formschlüssigen Festlegung eines mit korrespondierenden Eingriffsmitteln ausgestatteten separaten Deckels auch als Nut bzw. Eingriffsvorsprung eines Bajonettverschlusses ausgebildet sein. Die Mittel zur formschlüssigen Festlegung eines mit korrespondierenden Eingriffsmitteln ausgestatteten separaten Deckels können aber auch an einer Aussenfläche 84 des zylindrischen Fortsatzes 82 ausgebildet sein. In Einklang mit den vorstehend geschilderten Ausführungsbeispielen kann es sich dabei um einen Flip-Top Verschluss handeln, der über ein Scharnier einstückig an der Manschette 7 angebunden ist (nicht dargestellt). Die Manschette 7 und der über das Scharnier einstückig angebundene Flip-Top Verschluss können wiederum als Verschlussteil 10 bezeichnet werden.

Ein Ausgiessfortsatz 86 überragt die Oberseite 72 der Manschette 7. Der Ausgiessfortsatz 86 ist einstückig mit dem Halsabschnitt 4 des Preforms verbunden, der beim geblasenen Kunststoffbehälter 51 einen Behälterhals 54 bildet. Der Ausgiessfortsatz 86 weist einen Öffnungsdurchmesser auf, der im wesentlichen einem Durchmesser der Ausgiessöffnung am Halsabschnitt 4 entspricht, welcher den Behälterhals 54 bildet. Indem der Ausgiessfortsatz 86 bereits integral mit dem Preform gespritzt ist, kann ein separater Ausgiessaufsatz, der üblicherweise auf die Behälteröffnung des fertig geblasenen Kunststoffbehälters aufgesetzt wird, entfallen. Der angespritzte Ausgiessfortsatz 86 weist einen axialen Schlitz 87 auf, der sich bis zur Manschette 7 erstreckt. Dadurch kann überschüssiges Material, das sich in einem vom dem Ausgiessfortsatz 86 und dem zylindrischen Fortsatz 82 begrenzten Ringraum 88 ansammeln kann, wieder zurück in das Innere des Kunststoffbehälters fliessen.

Das Verschlussteil 10 und die sich oberhalb der Manschette 7 erstreckenden Abschnitte des Preforms werden beim Blasverfahren nicht mehr verändert und behalten ihre durch das Spritzgiessen vorgegebenen Abmessungen bei. Nur der sich unterhalb des Verschlussteils 10 erstreckende Abschnitt des Preforms wird beim Blasverfahren axial und radial gestreckt bzw. aufgeweitet. Dabei wird der sich unterhalb des Verschlussteils 10 in Richtung des Preformkörpers erstreckende Teil des Halsabschnitts 4 des Preforms beispielsweise derart verformt, dass er im Wesentlichen in Anlage zu einer Unterseite der Manschette 7 gelangt.

Die vorstehend beschriebenen Ausführungsbeispiele für einen erfindungsgemässen Kunststoffbehälter können in einem Zwei- oder Mehrkomponenten Spritzgiessverfahren aus einem erfindungsgemässen Preform mit spritztechnisch verbundenem Verschlussteil hergestellt sein. Der erfindungsgemässe Preform kann dabei beispielsweise in einer Etagenwendetechnik oder in einer Würfeltechnik hergestellt sein. Diese Herstellverfahren sind hinlänglich erprobt und erlauben eine wirtschaftliche und schnelle Herstellung grosser Stückzahlen. Der Kunststoffbehälter kann dann in einem Spritzblasverfahren oder in einem räumlich und/oder zeitlich getrennten Blasverfahren aus dem Preform hergestellt sein. Dabei kann der Preform während des Blasverfahrens mittels eines Reckdorns axial gestreckt werden. Das Spritzblasverfahren weist den Vorteil auf, dass der erfindungsgemässe Preform von seiner Herstellung im Spritzgiessverfahren bis zum Aufblasen zum fertigen Kunststoffbehälter nicht aus der apparativen Anlage entfernt werden muss. Alternativ kann der erfindungsgemässe Preform aber auch zwischengelagert, an den gewünschten Ort transportiert und erst zu einem späteren Zeitpunkt zu einem Kunststoffbehälter der gewünschten Form aufgeblasen werden.

Ein erfindungsgemässer Kunststoffbehälter kann ein Fassungsvolumen von 20 ml bis 15 1, vorzugsweise 50 ml bis 5 1,besonders bevorzugt 100 ml bis 1000 ml, ganz besonders bevorzugt 5 ml bis 150 ml aufweisen.

Die Erfindung ist im vorstehenden anhand verschiedener Ausführungsbeispiele erläutert worden, in denen ein Verschlussteil, das je nach seiner Funktion eine unterschiedliche Form aufweisen kann, und ein Preform mit Preformkörper und Preformhals spritztechnisch zu einer baulichen Gesamtheit verbunden sind. Das aus einer Manschette und einen über ein Scharnier einstückig angebundenen Flip-Top Verschluss umfassende Verschlussteil wird beim Blasverfahren nicht mehr verändert und behält seine durch das Spritzgiessen vorgegebenen Abmessungen bei. Nur der sich unterhalb des Verschlussteils erstreckende Abschnitt des Preforms wird beim Blasverfahren axial und radial gestreckt bzw. aufgeweitet. Die vorstehende Beschreibung von konkreten Ausführungsbeispielen dient nur zur Erläuterung der Erfindung und ist nicht als einschränkend zu betrachten.

## Patentansprüche

1. Spritzgegossener Preform (1) zur Herstellung eines Kunststoffbehälters in einem Blasverfahren mit einem länglichen, röhrchenartigen Preformkörper(2), der an seinem einen Längsende geschlossen ausgebildet ist und an seinem anderen Längsende einen mit einer Ausgiessöffnung (5) versehenen Halsabschnitt (4) aufweist, der spritztechnisch mit einem in einem Spritzgiessverfahren hergestellten Verschlussteil verbunden ist, **dadurch gekennzeichnet, dass** das Verschlussteil einen Flip-Top Verschluss (9) und eine den Halsabschnitt umschliessende Manschette (7) umfasst an der über ein Scharnier (8) der Flip-Top Verschluss (9) einstückig angebunden ist, wobei die Manschette (7) einen ringförmig ausgebildeten Abschnitt (70) mit einer Innenwandung (71) aufweist, die unmittelbar an einer Aussenfläche (61) des Halsabschnitts (4) anliegt und einen ringförmig geschlossenen Bereich (6) der Aussenfläche (61) des Halsabschnitts (4) vollständig umschliesst.

2. Preform nach Anspruch 1, **dadurch gekennzeichnet, dass** das Verschlussteil im Anlagebereich formschlüssig mit dem ringförmig umschlossenen Bereich (6) der Aussenfläche (61) des Halsabschnitts (4) verbunden ist.

3. Preform (1) nach Anspruch 1 oder 2, **dadurch gekennzeichnet, dass** das Verschlusstteil im Anlagebereich kraftschlüssig mit dem ringförmig umschlossenen Bereich (6) der Aussenfläche (61) des Halsabschnitts (4) verbunden ist.

4. Preform (1) nach einem der Ansprüche 1 bis 3, **dadurch gekennzeichnet, dass** das Verschlussteil im Anlagebereich stoffschlüssig, vorzugsweise durch zumindest teilweises Aufschmelzen der an der Aussenfläche (61) des Halsabschnitts (4) anliegenden Innenwandung (71) des Verschlussteils, mit dem ringförmig umschlossenen Bereich (6) der Aussenfläche (61) des Halsabschnitts (4) verbunden ist.

5. Preform (1) nach einem der vorangehenden Ansprüche, **dadurch gekennzeichnet, dass** das Verschlussteil zu wenigstens 90 % aus einem Kunststoff der Gruppe bestehend aus Polyolefinen, insbesondere aus Polypropylen oder Polyethylen, Polyamid, PET, PEF sowie gummiartigen Substanzen, wie z.B. TPE, besteht.

6. Preform (1) nach einem der vorangehenden Ansprüche, **dadurch gekennzeichnet, dass** der Preformkörper (2) mit Halsabschnitt (4) zu wenigstens 90% aus einem Kunststoff der Gruppe bestehend aus PET, PET-G, HDPE, PP, PE, PS, PVC, PEN, PA, Copolymeren der angeführten Kunststoffe, Biokunststoffen wie beispielsweise PLA oder PEF, gefüllten Kunststoffen und/oder Mischungen der genannten Kunststoffe, insbesondere Gemischen aus PP und PE, besteht.

7. Preform (1) nach einem der vorangehenden Ansprüche, **dadurch gekennzeichnet, dass** das Verschlusstteil und der Preform (1) aus voneinander verschiedenen Kunststoffmaterialien bestehen.

8. Preform (1) nach einem der vorangehenden Ansprüche, **dadurch gekennzeichnet, dass** das Verschlusstteil und der Preformkörper (2) mit Halsabschnitt (4) wenigstens bereichsweise voneinander verschiedene Farben aufweisen.

9. Preform (1) nach einem der vorangehenden Ansprüche, **dadurch gekennzeichnet, dass** das Verschlusssteil und/oder der Preformkörper (2) mit Halsabschnitt (4) wenigstens bereichsweise transparent ausgebildet sind.

10. Preform (1) nach einem der vorangehenden Ansprüche, **dadurch gekennzeichnet, dass** der den ringförmig geschlossenen Bereich (6) der Aussenfläche (61) des Halsabschnitts (4) vollständig umschliessende Abschnitt (70) des Verschlussteils eine in eine axiale Erstreckungsrichtung des Preforms (1) gemessene Höhe aufweist, die wenigstens 1 mm beträgt.

11. Preform (1) nach einem der vorangehenden Ansprüche, **dadurch gekennzeichnet, dass** der Preformkörper (2) mit Halsabschnitt (4) eine axiale Länge aufweist, die 2 mm bis 500 mm, vorzugsweise 10 mm bis 500 mm, beträgt.

12. Preform (1) nach einem der vorangehenden Ansprüche, **dadurch gekennzeichnet, dass** die Ausgiessöffnung (5) am Halsabschnitt (4) einen Durchmesser aufweist, der 3 mm bis 180 mm, vorzugsweise 10 mm bis 100 mm, beträgt.

13. Preform (1) nach einem der vorangehenden Ansprüche, **dadurch gekennzeichnet, dass** die an die Aussenfläche (61) anliegende Innenwandung (71) des Verschlussteils eine Innenkontur aufweist, die von einer Aussenkontur des Verschlussteils verschieden ist.

14. Preform (1) nach Anspruch 13, **dadurch gekennzeichnet, dass** das Verschlusssteil ein von einer ringförmigen Begrenzungswandung (74), die sich axial vom einer Oberseite der Manschette (7) erstreckt, umschlossenes Auffangvolumen (75) aufweist und dass der Halsabschnitt (4) des Preforms (1) die Oberseite der Manschette (7) axial überragt, wobei die ringförmige Begrenzungswandung (6) und der Halsabschnitt (4) etwa auf gleicher Höhe enden und am Halsabschnitt(4), etwa auf Höhe der Manschette (7) Aussparungen angebracht sind, welche eine Verbindung des Auffangvolumens (75) zu einem Inneren des Preformkörpers (2) bilden.

15. Preform (1) nach einem der Ansprüche 1 bis 14, **dadurch gekennzeichnet, dass** die Manschette (7) und der über ein Scharnier (8) einstückig angebundene Flip-Top Verschluss (9) einen beliebigen Querschnitt aufweisen, der beispielsweise rund, oval oder mehreckig ausgebildet ist.

16. Preform (1) nach einem der Ansprüche 1 bis 15, **dadurch gekennzeichnet, dass** die Manschette (7) einen den Halsabschnitt (4) überragenden, im Wesentlichen zylindrischen Fortsatz (78) mit einer Innenfläche (79) und einer Aussenfläche (81) aufweist, von der ein Griffteil (77) abragt, das sich in Richtung des Preformbodens erstreckt.

17. Preform (1) nach einem der Ansprüche 1 bis 15, **dadurch gekennzeichnet, dass** die Manschette (7) einen den Halsabschnitt (4) überragenden, im Wesentlichen zylindrischen Fortsatz (82) aufweist, der eine Innenfläche (83) oder eine Aussenfläche besitzt, und mit einem einstückig mit dem Preform (1) gespritzten Ausgiessfortsatz (86), der den Halsabschnitt (4) des Preforms (1) überragt und mit einem axialen Schlitz (87) versehen ist, der sich bis zu einer Oberseite der Manschette (7) erstreckt, wobei der Ausgiessfortsatz (87) einen Öffnungsdurchmesser aufweist, der im wesentlichen einem Durchmesser der Ausgiessöffnung am Halsabschnitt (4) entspricht.

18. Preform (1) nach einem der vorangehenden Ansprüche, **dadurch gekennzeichnet, dass** er in einem Zwei- oder Mehrkomponenten Spritzgiessverfahren hergestellt ist.

19. Kunststoffbehälter (21; 31; 41; 51) hergestellt in einem Blasverfahren aus einem Preform (1) gemäss einem der vorangehenden Ansprüche.

20. Kunststoffbehälter nach Anspruch 19, **dadurch gekennzeichnet, dass** er ein Fassungsvolumen von 5 ml bis 3000 ml, vorzugsweise bis 1000 ml, besonders bevorzugt 5 ml bis 150 ml aufweist.

21. Kunststoffbehälter (21; 31; 41; 51) nach Anspruch 19 oder 20, **dadurch gekennzeichnet, dass** er in einem Spritzblasverfahren oder in einem räumlich und/oder zeitlich vom Spritzgiessverfahren getrennten Blasverfahren hergestellt ist.

22. Kunststoffbehälter (21; 31; 41; 51) nach Anspruch 21, **dadurch gekennzeichnet, dass** er aus einem während des Blasverfahrens mittels eines Reckdorns axial gestreckten Preform hergestellt ist.

23. Verfahren zur Fertigung eines Preforms (1) mit einem Funktionsteil (10) nach einem der Ansprüche 1 bis 18, wobei das Verfahren die folgenden Verfahrensschritte aufweist:
(i) Spritzgiessen eines Verschlussteils mit einem Flip-Top Verschluss (9) in geöffneter Position in einer ersten Spritzform;
(ii) gegebenenfalls Abkühlen des Verschlussteils;
(iii) Spritzen eines Preforms (1) mit Preformkörper (2) und Halsabschnitt (4) mit Ausgiessöffnung an das Verschlussteil in einer zweiten Spritzform derart, dass eine Innenwandung (71) eines ringförmigen Abschnitts (70) des Verschlussteils unmittelbar an einer Aussenfläche (61) des Halsabschnitts (4) des Preforms (1) anliegt;
(iv) Abkühlen des Preforms (1) mit anliegendem Verschlussteil; und
(v) Entformung des Preforms (1) mit anliegendem Verschlussteil aus der zweiten Spritzform;
wobei alle Verfahrensschritte in einer Maschineneinheit durchgeführt werden.

24. Verfahren nach Anspruch 23, **dadurch gekennzeichnet, dass** der Flip-Top Verschluss (9) in geöffneter Position über ein Scharnier (8) einstückig an eine Manschette (7) angespritzt wird.

25. Verfahren nach Anspruch 24, **gekennzeichnet durch** ein Verlagern des Flip-Top Verschlusses (9) in eine die Ausgiessöffnung (5) des Preforms (1) verschliessende Position.

26. Verfahren nach Anspruch 25, **dadurch gekennzeichnet, dass** das Verlagern des Flip-Top Verschlusses (9) in die verschliessende Position in der Maschineneinheit durchgeführt wird.

27. Verfahren zur Herstellung eines Kunststoffbehälters (21; 31; 41; 51) aus einem nach den Ansprüchen 23 bis 26 hergestellten Preform (1), **gekennzeichnet durch** Blasen oder Streckblasen in einer Maschineneinheit, in der der Preform gefertigt wird.

## Claims

1. An injection moulded preform (1) for manufacturing a plastic container in a blow moulding method with an elongate, tubelike preform body (2) which is designed closed at its one longitudinal end and at its other longitudinal end comprises a neck section (4) which is provided with a pour opening (5) and which with regard to injection technology is connected to a closure part which is manufactured in an injection moulding method, **characterised in that** the closure part is a flip-top closure (9) and comprises a sleeve (7) which surrounds the neck section and on which the flip-top closure (9) is connected as one piece via a hinge (8), wherein the sleeve (7) comprises an annularly designed section (70) with an inner wall (71) which bears directly on an outer surface (61) of the neck section (4) and completely surrounds an annularly closed region (6) of the outer surface (61) of the neck section (4).

2. Preform according to claim 1, **characterised in that** the closure part is positively connected to the annularly surrounded region (6) of the outer surface (61) of the neck section (4) in the bearing contact region.

3. Preform (1) according to claim 1 or 2, **characterised in that** the closure part is non-positively connected to the annularly surrounded region (6) of the outer surface (61) of the neck section (4) in the bearing contact region.

4. Preform (1) according to one of the claims 1 to 3, **characterised in that** the closure part is materially connected in the bearing contact region to the annularly surrounded region (6) of the outer surface (61) of the neck section (4), preferably by way of at least partial melting of the inner wall (71) of the closure part which bears on the outer surface (61) of the neck section (4).

5. Preform (1) according to one of the preceding claims, **characterised in that** the closure part consists at least to 90% of a plastic from the group consisting of polyolefins, in particular of polypropylene or polyethylene, polyamide, PET, PEF, as well as rubber-like substances, such as e.g. TPE.

6. Preform (1) according to one of the preceding claims, **characterised in that** the preform body (2) with the neck section (4) consists of up to at least 90% of a plastic from the group consisting of PET, PET-G, HDPE, PP, PE, PS, PVC, PEN, PA, copolymers of the specified plastics, bioplastics such as for example PLA or PEF, filled plastics and/or mixtures of the mentioned plastics, in particular mixtures of PP and PE.

7. Preform (1) according to one of the preceding claims, **characterised in that** the closure part and the preform (1) consist of plastic materials which are different to one another.

8. Preform (1) according to one of the preceding claims, **characterised in that** the closure part and the preform body (2) with the neck section (4) at least in regions have colours which are different from one another.

9. Preform (1) according to one of the preceding claims, **characterised in that** the closure part and/or the preform body (2) with the neck section (4) at least in regions are designed transparently.

10. Preform (1) according to one of the preceding claims, **characterised in that** the section (70) of the closure part which completely surrounds the annularly closed region (6) of the outer surface (61) of the neck sections (4) has a height which is measured in an axial extension direction of the preform (1) which is at least 1 mm.

11. Preform (1) according to one of the preceding claims, **characterised in that** the preform body (2) with the neck section (4) has an axial length which is 2 mm to 500 mm, preferably 10 mm to 500 mm.

12. Preform (1) according to one of the preceding claims, **characterised in that** the pour opening (5) on the neck section (4) has a diameter which is 3 mm to 180 mm, preferably 10 mm to 100 mm.

13. Preform (1) according to one of the preceding claims, **characterised in that** the inner wall (71) of the closure part which bears on the outer contour (61) has an inner contour which is different to the outer contour of the closure part.

14. Preform (1) according to claim 13, **characterised in that** the closure part comprises a capture volume (75) which is surrounded by an annular boundary wall (74) which extends axially from an upper side of the sleeve (7) and that the neck section (4) of the preform (1) projects axially beyond the upper side of the sleeve (7), wherein the annular boundary wall (6) and the neck section (4) end roughly at the same height and recesses are incorporated on the neck sections (4) roughly at the height of the sleeve (7) and form a connection of the capture volume (75) to an inside of the preform body (2).

15. Preform (1) according to one of the claims 1 to 14, **characterised in that** the sleeve (7) and the flip-top closure (9) which is connected as one piece via a hinge (8) have an arbitrary cross section which is designed for example in a round, oval or polygonal manner.

16. Preform (1) according to one of the claims 1 to 15, **characterised in that** the sleeve (7) comprises a continuation (78) which projects beyond the neck section (4) and is essentially cylindrical and is with an inner surface (79) and an outer surface (81), from which a grip part (77) which extends in the direction of the preform base projects.

17. Preform (1) according to one of the claims 1 to 15, **characterised in that** the sleeve (7) comprises a continuation (82) which projects beyond the neck section (4), is essentially cylindrical and has an inner surface (83) or an outer surface and is provided with a pour continuation (86) which is injected as one piece with the preform (1) and projects beyond the neck section (4) of the preform (1) and with an axial slot (87) which extends up to an upper side of the sleeve (7), wherein the pour continuation (87) has an opening diameter which corresponds essentially to a diameter of the pour opening on the neck section (4).

18. Preform (1) according to one of the preceding claims, **characterised in that** it is manufactured in a two-component or multi-component injection moulding method

19. Plastic container (21; 31; 41; 51) manufactured in a blow moulding method from a preform (1) according to one of the preceding claims.

20. Plastic container according to claim 19, **characterised in that** it has a volume capacity of 5 ml to 3000 ml, preferably up to 1000 ml, particularly preferably 5 ml to 150 ml.

21. Plastic container (21; 31; 41; 51) according to claim 19 or 20, **characterised in that** it is manufactured in an injection blow moulding method or in a blow moulding method which is spatially and/or temporally separate from the injection moulding method

22. Plastic container (21; 31; 41; 51) according to claim 21, **characterised in that** it is manufactured from a preform which is axially stretched by way of a stretching mandrel during the blow moulding method

23. A method for manufacturing a preform (1) with a function part (10) according to one of the claims 1 to 18, comprising the following method steps:
(i) injection moulding a closure part with a flip-top closure (8) in an opened position in a first injection mould;
(ii) possibly cooling the closure part;
(iii) injecting a preform (1) with a preform body (2) and neck section (4) with a pour opening onto the closure part in a second injection mould in a manner such that an inner wall (71) of an annular section (70) of the closure part bears directly on an outer surface (61) of the neck section (4) of the preform (1);
(iv) cooling the preform (1) with the bearing-on closure part; and
(v) demoulding the preform (1) with the bearing-on closure part from the second injection mould;
wherein all method steps are carried out in a machine unit.

24. Method according to claim 23, **characterised in that** the flip-top closure (9) in the opened position is injected onto a sleeve (7) as one piece via a hinge (8).

25. Method according to claim 24, **characterised by** a displacement of the flip-top closure (9) into a position which closes the pour opening (5) of the preform (1).

26. Method according to claim 25, **characterised in that** the displacing of the flip-top closure (9) into the closing position is carried out in the machine unit.

27. Method for manufacturing a plastic container (21; 31; 41; 51) from a preform (1) which is manufactured according to the claims 23 to 26, **characterised by** blow moulding and stretch blow moulding in a machine unit, in which the preform is manufactured.

## Revendications

1. Préforme (1) moulée par injection, en vue de la fabrication d'un récipient en matériau synthétique au cours d'un procédé de soufflage, comprenant un corps de préforme (2) allongé en forme de petit tube qui est fermé à l'une de ses extrémités longitudinales et présente à son autre extrémité longitudinale une partie de col (4) qui est dotée d'une ouverture de versement (5) et est reliée, du point de vue de la technique de l'injection, à un élément de fermeture réalisé au cours d'un procédé de moulage par injection, **caractérisée en ce que** l'élément de fermeture comprend une fermeture de type flip-top (9) et une manchette (7) qui entoure la partie de col et à laquelle la fermeture flip-top (9) est liée d'une seule pièce par l'intermédiaire d'une charnière (8), la manchette (7) présentant une partie (70) réalisée sous une forme annulaire et comportant une paroi interne (71) qui est appliquée directement contre une surface externe (61) de la partie de col (4) et entoure complètement une portion (6) fermée sous une forme annulaire de la surface externe (61) de la partie de col (4).

2. Préforme selon la revendication 1, **caractérisée en ce que**, dans la zone d'application, l'élément de fermeture est lié par complémentarité de forme à la portion (6), entourée sous une forme annulaire, de la surface externe (61) de la partie de col (4).

3. Préforme (1) selon la revendication 1 ou 2, **caractérisée en ce que**, dans la zone d'application, l'élément de fermeture est lié par adhérence à la portion (6), entourée sous une forme annulaire, de la surface externe (61) de la partie de col (4).

4. Préforme (1) selon l'une des revendications 1 à 3, **caractérisée en ce que**, dans la zone d'application, l'élément de fermeture est lié par matière, de préférence par fusion au moins partielle de la paroi interne (71) de l'élément de fermeture appliquée contre la surface externe (61) de la partie de col (4), à la portion (6), entourée sous une forme annulaire, de la surface externe (61) de la partie de col (4).

5. Préforme (1) selon l'une des revendications précédentes, **caractérisée en ce que** l'élément de fermeture est constitué pour au moins 90 % d'un matériau synthétique du groupe comprenant des polyoléfines, notamment du polypropylène ou du polyéthylène, du polyamide, PET, PEF, ainsi que des substances ayant la consistance du caoutchouc, telles que les TPE.

6. Préforme (1) selon l'une des revendications précédentes, **caractérisée en ce que** le corps de préforme (2), avec la partie de col (4), est constitué pour au moins 90 % d'un matériau synthétique du groupe comprenant PET, PET-G, HDPE, PP, PE, PS, PVC, PEN, PA, des copolymères des matériaux synthétiques cités, des bioplastiques tels que le PLA ou le PEF, des matières plastiques chargées et/ou des mélanges des matériaux synthétiques cités, en particulier des mélanges de PP et de PE.

7. Préforme (1) selon l'une des revendications précédentes, **caractérisée en ce que** l'élément de fermeture et la préforme (1) sont constitués de matériaux synthétiques différents.

8. Préforme (1) selon l'une des revendications précédentes, **caractérisée en ce que** l'élément de fermeture et le corps de préforme (2), avec la partie de col (4), présentent des couleurs différentes au moins dans certaines portions.

9. Préforme (1) selon l'une des revendications précédentes, **caractérisée en ce que** l'élément de fermeture et/ou le corps de préforme (2), avec la partie de col (4), sont réalisés de manière transparente au moins dans certaines portions.

10. Préforme (1) selon l'une des revendications précédentes, **caractérisée en ce que** la partie (70) de l'élément de fermeture qui entoure complètement la portion (6), fermée de façon annulaire, de la surface externe (61) de la partie de col (4) présente une hauteur, mesurée dans une direction axiale de la préforme (1), qui équivaut au moins à 1 mm.

11. Préforme (1) selon l'une des revendications précédentes, **caractérisée en ce que** le corps de préforme (2), avec la partie de col (4), présente une longueur axiale qui est comprise entre 2 mm et 500 mm, de préférence entre 10 mm et 500 mm.

12. Préforme (1) selon l'une des revendications précédentes, **caractérisée en ce que** l'ouverture de versement (5) prévue sur la partie de col (4) présente un diamètre qui est compris entre 3 mm et 180 mm, de préférence entre 10 mm et 100 mm.

13. Préforme (1) selon l'une des revendications précédentes, **caractérisée en ce que** la paroi interne (71) de l'élément de fermeture qui est appliquée contre la surface externe (61) présente un contour interne qui est différent d'un contour externe de l'élément de fermeture.

14. Préforme (1) selon la revendication 13, **caractérisée en ce que** l'élément de fermeture présente un volume de collecte (75) qui est entouré par une paroi de délimitation (74) annulaire s'étendant axialement à partir d'une face supérieure de la manchette (7), et **en ce que** la partie de col (4) de la préforme (1) dépasse axialement par rapport à la face supérieure de la manchette (7), la paroi de délimitation (6) annulaire et la partie de col (4) se terminant à peu près à la même hauteur, et des évidements étant prévus sur la partie de col (4), à peu près à hauteur de la manchette (7), qui établissent une liaison du volume de collecte (75) avec un espace intérieur du corps de préforme (2) .

15. Préforme (1) selon l'une des revendications 1 à 14, **caractérisée en ce que** la manchette (7) et la fermeture de type flip-top (9), reliée d'une seule pièce par l'intermédiaire d'une charnière (8), présentent n'importe quelle section transversale, par exemple avec une forme ronde, ovale ou polygonale.

16. Préforme (1) selon l'une des revendications 1 à 15, **caractérisée en ce que** la manchette (7) présente un prolongement (78) sensiblement cylindrique qui dépasse par rapport à la partie de col (4) et est doté d'une surface interne (79) et d'une surface externe (81) à partir de laquelle fait saillie un élément formant poignée (77) qui s'étend en direction du fond de la préforme.

17. Préforme (1) selon l'une des revendications 1 à 15, **caractérisée en ce que** la manchette (7) présente un prolongement (82) sensiblement cylindrique qui dépasse par rapport à la partie de col (4) et est doté d'une surface interne (83) ou d'une surface externe, et comprenant un prolongement à bec verseur (86) qui est injecté d'une seule pièce avec la préforme (1), dépasse par rapport à la partie de col (4) de la préforme (1) et est pourvu d'une fente (87) axiale qui s'étend jusqu'à une face supérieure de la manchette (7), le prolongement à bec verseur (87) présentant un diamètre d'ouverture qui correspond sensiblement à un diamètre de l'ouverture de versement sur la partie de col (4).

18. Préforme (1) selon l'une des revendications précédentes, **caractérisée en ce qu'**elle est réalisée au cours d'un procédé de moulage par injection de deux ou plusieurs composants.

19. Récipient en matériau synthétique (21 ; 31 ; 41 ; 51) réalisé avec un procédé de soufflage à partir d'une préforme (1) selon l'une des revendications précédentes.

20. Récipient en matériau synthétique selon la revendication 19, **caractérisé en ce qu'**il présente une capacité allant de 5 ml à 3 000 ml, de préférence à 1 000 ml, et allant de manière particulièrement avantageuse de 5 ml à 150 ml.

21. Récipient en matériau synthétique (21 ; 31 ; 41 ; 51) selon la revendication 19 ou 20, **caractérisé en ce qu'**il est fabriqué avec un procédé d'injection-soufflage ou avec un procédé de soufflage séparé dans l'espace et/ou dans le temps du procédé de moulage par injection.

22. Récipient en matériau synthétique (21 ; 31 ; 41 ; 51) selon la revendication 21, **caractérisé en ce qu'**il est fabriqué à partir d'une préforme qui est étirée dans le sens axial à l'aide d'un mandrin d'étirage pendant le procédé de soufflage.

23. Procédé de fabrication d'une préforme (1) dotée d'un élément fonctionnel (10) selon l'une des revendications 1 à 18, comprenant les étapes de procédé suivante :
(i) le moulage par injection d'un élément de fermeture comportant une fermeture de type flip-top (9), dans une position ouverte, dans un premier moule d'injection ;
(ii) le cas échéant, le refroidissement de l'élément de fermeture ;
(iii) l'injection d'une préforme (1) comprenant un corps de préforme (2) et une partie de col (4) avec une ouverture de versement, sur l'élément de fermeture, dans un deuxième moule d'injection, de telle sorte qu'une paroi interne (71) d'une partie (70) annulaire de l'élément de fermeture est appliquée directement contre une surface externe (61) de la partie de col (4) de la préforme (1) ;
(iv) le refroidissement de la préforme (1) avec l'élément de fermeture appliqué ; et
(v) le démoulage de la préforme (1), avec l'élément de fermeture appliqué, du deuxième moule à injection ;
l'ensemble des étapes du procédé étant exécutées dans une unité de machine.

24. Procédé selon la revendication 23, **caractérisé en ce que** la fermeture flip-top (9) est moulée par injection d'une seule pièce sur une manchette (7), en position ouverte, par l'intermédiaire d'une charnière (8).

25. Procédé selon la revendication 24, **caractérisé en ce qu'**il comprend un déplacement de la fermeture flip-top (9) dans une position d'obturation de l'ouverture de versement (5) de la préforme (1).

26. Procédé selon la revendication 25, **caractérisé en ce que** le déplacement de la fermeture flip-top (9) dans la position d'obturation est effectué dans l'unité de machine.

27. Procédé de fabrication d'un récipient en matériau synthétique (21 ; 31 ; 41 ; 51) à partir d'une préforme (1) réalisée selon l'une des revendications 23 à 26, **caractérisé en ce qu'**il comprend le soufflage ou le soufflageétirage dans une unité de machine dans laquelle est réalisée la préforme.
